# EUROPÄISCHE PATENTSCHRIFT

(11) **EP 3 006 186 B1**
(45) Veröffentlichungstag und Bekanntmachung des Hinweises auf die Patenterteilung: **17.02.2021**
(21) Anmeldenummer: 15002563.3
(22) Anmeldetag: 01.09.2015
(51) Int. Cl.: B29C 48/10, B29C 48/08, B29C 48/14, B29C 48/36, B29C 48/29, B29C 48/92, B29C 48/21

(54) **COEXTRUSIONSVORRICHTUNG ZUM HERSTELLEN EINER FOLIE, SOWIE ENTSPRECHENDES VERFAHREN MIT DER MESSUNG EINER SCHICHTDICKE**
COEXTRUSION DEVICE FOR PRODUCING A FILM OF PLASTIC MATERIAL AND CORRESPONDING METHOD WITH THE MEASUREMENT OF A LAYER THICKNESS
DISPOSITIF DE COEXTRUSION POUR PRODUIRE UN FILM PLASTIQUE ET PROCÉDÉ CORRESPONDANT COMPRENANT LA MESURE D'UNE EPAISSEUR DE COUCHE

(30) Priorität: 06.10.2014 DE 102014014511
(43) Veröffentlichungstag der Anmeldung: 13.04.2016
(73) Patentinhaber: Reifenhäuser GmbH & Co. KG Maschinenfabrik, 53844 Troisdorf (DE)
(72) Erfinder: Meyer, Helmut, 53842 Troisdorf (DE)
(74) Vertreter: FARAGO Patentanwälte

(56) Entgegenhaltungen:
- EP-A1- 1 780 500
- WO-A2-2004/051769
- DE-A1- 2 503 172
- GB-A- 2 342 310
- JP-A- 2000 127 227
- JP-A- 2008 230 130
- JP-B2- 4 901 483
- JP-U- S5 482 063
- US-A- 4 943 721
- US-A1- 2013 127 087
- US-B2- 7 858 953

## Beschreibung

Die Erfindung betrifft eine Coextrusionsvorrichtung nach Anspruch 1 und ein korrespondierendes Verfahren nach Anspruch 15.

Das Extrudieren von Kunststofffolien ist gängige Praxis und hat sich seit Jahren bewährt. Mit einem Extruder wird ein Ausgangsmaterial, meist ein Kunststoffgranulat, plastifiziert, also gefördert, aufgeschmolzen, homogenisiert und unter Druck gesetzt. Die resultierende Kunststoffschmelze wird über eine Zuführung vom Extruder zum Extrusionsblock geführt, in welchem letztlich das Extrusionswerkzeug, meist in Form einer Breitschlitzdüse oder einer Runddüse im Falle eines Blasfolienverfahrens, eine Folie aus der Kunststoffschmelze formt. Über ein permanentes Abziehen gelangt die schmelzeförmige Folie in einen Abkühlbereich und kann dort erstarren, beispielsweise auf einer Kühlwalze, in der Praxis gern als Chill Roll bezeichnet, oder im Blasfolienverfahren durch Kühleinrichtungen wie Luftkühlringe.

Häufig werden nicht nur einschichtige Folien aus dem Ausgangsmaterial, einem thermoplastischen Kunststoff, hergestellt, sondern mehrschichtige Folienverbunde.

Zum Herstellen der Schichtung werden üblicherweise Coextrusionsadapter eingesetzt. Einen solchen Coextrusionsadapter zeigt die EP 2 332 714 A1.

Um die Schichtdicken im hergestellten Verbund zu messen, schlägt die US 7,858,953 B2 vor, fluoreszente Nanopartikel mit dem übrigen Ausgangsmaterial, beispielsweise Kunststoffgranulat, zu plastifizieren. Solche Partikel können anschließend mittels eines Weißlicht-Interferometers zum Berechnen der Schichtdicke bestimmt werden. Das US-Patent US 7 858 953 B2 offenbart die Einarbeitung fluoreszierender Nanopartikel in Kunststoff-, Papier- und andere Bahnschichtprodukte, um eine Online-Analyse der einzelnen Schichten in Querrichtung und Maschinenrichtung zu erreichen. Fluoreszierende Nanopartikelmarker werden in bekannten Anteilen in Produktformulierungen gegeben. Durch Erfassen der Fluoreszenz der Nanopartikel können die Dicke und andere physikalische Eigenschaften der Bahn in verschiedenen Produktionsstadien verfolgt werden. Durch die Verwendung unterschiedlicher Populationen fluoreszierender Nanopartikel, die Strahlung mit unterschiedlichen Wellenlängen emittieren, können außerdem Daten von einzelnen Schichten in einer Verbundstruktur gleichzeitig mit einem einzigen Sensor ermittelt werden. Weiterhin offenbart die US-amerikanische Offenlegungsschrift US 2013 / 127 087 A1 ein Verfahren zur Coextrusion von mindestens zwei geschmolzenen Materialströmen mit unterschiedlicher Zusammensetzung durch Trennen des geschmolzenen Materials in mindestens zwei geschmolzene Materialströme, Beimischen von Additiven in mindestens einem der geschmolzenen Materialströme und Zusammenführen der geschmolzenen Materialströme durch Coextrusion in einem oder mehreren Extrusionswerkzeugen.

Der Erfindung liegt die Aufgabe zugrunde, dem Stand der Technik eine Alternative oder eine Verbesserung zur Verfügung zu stellen.

Nach einem ersten Aspekt der vorliegenden Erfindung löst diese Aufgabe eine Coextrusionsvorrichtung zum Herstellen eines Kunststofffolienverbundes mit mehreren Schichten mit einer jeweiligen Schichtdicke, mit Extrudern, einem Coextrusionsblock und einer Zuführung von den Extrudern zum Coextrusionsblock, wobei ein erster Extruder zum Plastifizieren eines ersten Ausgangsmaterials sowie ein zweiter Extruder zum Plastifizieren eines zweiten Ausgangsmaterials vorgesehen sind, wobei eine Detektionsmittelzugebeinrichtung vorgesehen ist, welche dazu eingerichtet ist, ein Detektionsmittel zum Einbringen in eine Schicht zuzugeben, und wobei eine Detektiereinrichtung im und/oder in Maschinenrichtung jenseits des Coextrusionsblocks vorgesehen und dazu eingerichtet ist, anhand detektierten Detektionsmittels eine Messung einer Schichtdicke vorzunehmen, wobei sich die Vorrichtung dadurch kennzeichnet, dass die Detektionsmittelzugebeinrichtung in Maschinenrichtung jenseits der Extruder vorgesehen ist.

Begrifflich sei hierzu folgendes erläutert:

Unter der "Coextrusionsvorrichtung" sei entweder ein Teil einer Anlage oder aber die gesamte Anlage verstanden, welche zum Herstellen des Kunststofffolienverbundes notwendig sind. Eine Anlage kann also auch weitergehende Stationen enthalten, wie beispielsweise nachgeschaltete Glättwerke oder Wickler. Im kleinsten Umfang hingegen sind nur die Zuführung zum Coextrusionsblock und der Coextrusionsblock selbst in der Vorrichtung enthalten, weil auch ein solcher Anlagenteil potenziell an einen Kunden verkauft werden kann, wenn dieser bereits über Extruder verfügt.

Der Kunststofffolienverbund kann insbesondere als Flachfolie oder als Folienschlauch vorliegen, wenn er das Extrusionswerkzeug verlässt.

Extruder sind hinlänglich bekannt und sollen hier nicht weiter erläutert werden.

Der "Coextrusionsblock" besteht üblicherweise aus einem Coextrusionsadapter und dem letztendlichen Gießwerkzeug. Coextrusionsadapter werden für die Zusammenführung von mehreren thermoplastischen Materialien, die üblicherweise auch aus entsprechend mehreren Extrudern stammen, verwendet. Hierbei werden die einzelnen thermoplastischen Materialien als thermoplastische Schmelzen im Coextrusionsadapter in der gewünschten Schichtenlage aufeinander geführt und nachfolgend dem Extrusionswerkzeug zur Herstellung des mehrschichtigen Verbundes zugeführt. Oft findet sich ein Zentralkanal für eine zentrale Schicht, und die über die Coextrusionskanäle zugeführten thermoplastischen Materialien der übrigen Kanäle werden außenseitig angeordnet.

Die "Detektionsmittelzugebeinrichtung" muss im Zusammenspiel mit der "Detektiereinrichtung" ein passendes "Detektionsmittel" einbringen können. Üblicherweise ist es dazu erforderlich, dass das Detektionsmittel hinreichend gut im Kunststoff verteilt ist, nämlich möglichst homogen. Die "Maschinenrichtung" beschreibt die Strömrichtung des Ausgangsmaterials beziehungsweise seiner Schmelze durch die Anlage bis zur fertig gegossenen Folie.

Die hier vorgeschlagene Anordnung "jenseits der Extruder" bezeichnet eine Position, an welcher das Detektionsmittel in die bereits plastifizierte Schmelze, die aus dem Extruder austritt eingebracht wird. Der gesamte Bereich zwischen dem Austritt aus dem Extruder und dem Eintritt in den Coextrusionsblock, zunächst also in den Coextrusionsadapter des Coextrusionsblocks, wird als "Zuführung" bezeichnet. In der Zuführung liegen üblicherweise feste Kanäle vor.

Die hier vorgeschlagene Anordnung scheint zwar zunächst unnötig schwierig zu sein: Denn wenn das Detektionsmittel bereits im Trichter mit dem Granulat in den Extruder eingebracht wird, wird es automatisch auch sehr homogen in der Schmelze verteilt. Demgegenüber macht ein hier vorgeschlagenes, späteres Einbringen es üblicherweise erforderlich, eine weitere Homogenisiereinrichtung vorzusehen. Allerdings wird ein entscheidender Vorteil erreicht: Dadurch, dass das Einbringen des Detektionsmittels kürzer vor dem Extrusionswerkzeug erfolgt, ist auch die erforderliche Zeit für das Strömen des Detektionsmittels vom Einbringort zur gegossenen Folien kürzer. Es wird dadurch möglich, schneller eine Messung vorzunehmen, wenn an den Produktionsparametern eine Änderung vorgenommen wird.

Einen besonderen Vorteil bietet das Verfahren beispielsweise jedenfalls dann, wenn hinsichtlich des Einbringens oder des Dosierens des Ausgangsmaterials in die Extruder eine Änderung vorgenommen wird. Denn wenn eine nicht-kontinuierliche Messung durchgeführt wird, in welcher also nur in regelmäßigen oder unregelmäßigen Abständen Detektionsmittel eingebracht wird, dann muss von einem ersten Zeitpunkt, bei welchem eine qualitativ nicht ausreichende Folienschichtdicke festgestellt worden ist, zu welcher also eine Änderung in den Produktionsparametern vorgenommen wird, gewartet werden, bis das dann in den Extruder eingetrichterte Detektionsmittel aus der Düse in der Folie das Werkzeug verlässt. Während der gesamten Zwischenzeit wird Ausschuss produziert.

Demgegenüber kann mit der vorgestellten Erfindung beispielsweise eine Erwärmung im Werkzeug vorgenommen werden, oder es kann beispielsweise ein mechanisches Stellglied im Coextrusionsblock angesteuert werden, welches auf die Schichtdicken Einfluss hat, und durch eine Zuführung des Detektionsmittels möglichst kurz vor der Extrusionsdüse vergeht nur eine sehr geringe Zeit, bis die geänderten Dickenverhältnisse in der extrudierten Folie feststellbar sind.

Bevorzugt weist die Zuführung vom zweiten Extruder zum Coextrusionsblock eine Aufteilung auf, welche dazu eingerichtet ist, aus dem Extruder kommende Schmelze auf zwei getrennte Kanäle zum Erzeugen zweier Schichten aus dem zweiten Ausgangsmaterial aufzuteilen.

Es sei an dieser Stelle zunächst darauf hingewiesen, dass im Rahmen der vorliegenden Patentanmeldung unbestimmte Artikel und Zahlen wie "ein...", "zwei..." usw. regelmäßig als mindestens-Angaben zu verstehen sein sollen, also als "mindestens ein...", "mindestens zwei..." usw., sofern sich nicht aus dem jeweiligen Kontext oder besser Wortlaut ergibt, dass etwa dort nur "genau ein...", "genau zwei..." usw. gemeint sein soll.

So sei beispielsweise hier vorliegend ausdrücklich darauf hingewiesen, dass mehrere Extruder in der Coextrusionsvorrichtung vorliegen sollen, beispielsweise zwei, drei, vier oder mehr Extruder. Auch soll sich der Strom eines (also mindestens eines) Extruders in zwei getrennte Kanäle aufteilen, also in mindestens zwei getrennte Kanäle. Kurz gesagt geht es darum, dass der Strom mindestens eines Extruders aufgeteilt wird, so dass letztendlich das Extrusionswerkzeug aus dem Ausgangsmaterial eines einzelnen Extruders mehrere Schichten erzeugt.

Bei solchen Anlagen spielt sich ein besonders großer Vorteil der Erfindung ein:

Nach dem Stand der Technik ist es nicht möglich, die verschiedenen - aufgeteilten - Schichten eines Ausgangsmaterials aus einem Extruder getrennt voneinander zu messen. Wenn also in einem einfachen Fall eine zentrale Schicht mit zwei symmetrischen äußeren Schichten hergestellt werden soll, wobei die beiden äußeren Schichten aus demselben Ausgangsmaterial hergestellt werden sollen und daher aus einem einzigen Extruder gespeist werden, dann ist es bislang nicht möglich, die beiden äußeren Schichten jeweils einzeln mit der berührungslosen Messung zu messen. Vielmehr ermittelt die Interferometrie immer die Summe der beiden äußeren Schichten und meldet diese zurück. Es versteht sich, dass demgegenüber die hier vorgestellte Erfindung erhebliche Vorteile bringen kann, weil es durch die Einspeisung des Detektionsmittels erst nach dem Extruder möglich wird, die Einspeisung auch nach der Aufteilung in getrennte Kanäle vorzunehmen. Es kann dann durch unterschiedliches Einbringen - in zeitlicher oder materialtechnischer Hinsicht - von Detektionsmitteln in die aufgeteilten Kanäle eine Messung auch derjenigen Schichten erfolgen, die aus demselben Ausgangsmaterial und sogar aus demselben Extruder stammen.

Im Falle einer solchen Konstellation, mit einer Aufteilung der von einem Extruder kommenden Schmelze auf mindestens zwei getrennte Kanäle, wird vorgeschlagen, dass die Detektionsmittelzugebeinrichtung an einem der getrennten Kanäle angeordnet und dazu eingerichtet ist, das Detektionsmittel in die Zuführung zu genau einer Schicht zuzugeben.

Auf diese Weise kann eine der beiden Schichten in ihrer Dicke gemessen werden.

Alternativ ist denkbar, dass zwei Detektionsmittelzugebeinrichtungen an zwei der getrennten Kanäle angeordnet sind und jeweils dazu eingerichtet sind, dass Detektionsmittel in die Zuführung zu genau einer Schicht zuzugeben.

Es kann sich dabei um ein- und dasselbe Detektionsmittel handeln, auch wenn es um die zwei oder mehr Zuführungen zu den zwei oder mehr Schichten aus ein- und demselben Extruder oder jedenfalls aus ein- und demselben Ausgangsmaterial handelt. Denn das Detektionsmittel kann zeitlich versetzt in die getrennten Kanäle zugeführt werden, so dass die Schichten abwechselnd in ihrer jeweiligen Dicke gemessen werden können.

Selbst eine quasi-kontinuierliche Messung ist möglich, wenn beispielsweise in verschiedenen, fest vorgegebenen Intervallen oder Rhythmen das Detektionsmittel in die verschiedenen Kanäle eingebracht wird. Das Messgerät, beispielsweise ein Interferometer, kann mit einem Controller verbunden sein, und der Controller erkennt anhand des Rhythmus' der Messwerte, welche Werte welcher Schicht zuzuordnen sind. So kann in einem sehr einfachen Fall einer der getrennten Kanäle während einer designierten Messperiode permanent mit Detektionsmittel angereichert werden, der andere der Kanäle hingegen immer nur zehn Sekunden, woraufhin wieder zehn Sekunden Pause geschaltet werden. Das Messergebnis springt dann zwischen dem Dickenwert der permanent mit Detektionsmittel gespeisten Zuführung und der Addition der beiden Schichten, so dass die Differenz aus dem addierten Wert und dem permanenten Wert als die Schichtdicke der intermittierend gespeisten Schicht errechnet werden kann.

Es sei ausdrücklich daraufhingewiesen, dass im Regelfall nicht nur zwei Extruder vorhanden sein müssen, sondern auch mehr Extruder vorhanden sein können, vor allem bei Folien, die mehr als drei Lagen aufweisen sollen. Eine Aufteilung kann daher die von einem Extruder kommende Schmelze auf zwei oder mehr Kanäle aufteilen. Alternativ und kumulativ kann eine Aufteilung in der Zuführung von einem oder mehr Extrudern vorhanden sein. In der Praxis gibt es meist einen Zentralkanal, der von genau einem Extruder gespeist wird, und die weiteren Extruder speisen äußere Schichten des Folienverbundes, wobei im Fall eines symmetrischen Folienverbundes im Regelfall die Schichten außerhalb der Zentralschicht mit jeweils genau einer Aufteilung der Schmelzezuführung von jeweils genau einem Extruder zu jeweils genau zwei Außenschichten vorgenommen wird.

Eine einfachere Messmethode ergibt sich jedoch dann, wenn verschiedene Detektionsmittel in die getrennten Kanäle der Zuführung eines Extruders eingebracht werden. In diesem Fall kann sogar bei Vorhandensein mehrerer gleichzeitiger gemessener Schichtdicken jeder einzelnen Schicht ihre eigene Dicke zugeordnet werden.

Bevorzugt ist die Coextrusionsvorrichtung so eingerichtet, dass das Extrusionswerkzeug mehrere gleich dicke Schichten ein- und desselben Ausgangsmaterials erzeugen soll, nämlich vor allem die Außenschichten eines Folienverbundes.

Im Idealfall ist der gesamte hergestellte Kunststofffolienverbund symmetrisch.

Die Detektiereinrichtung sollte ein berührungsloses Messinstrument aufweisen, um die noch warme Folie nicht zu beschädigen.

Technisch wird hierzu vor allem Weißlicht-Interferometer vorgeschlagen.

Eine berührungslose Messung ist beispielsweise mit fluoreszenten Detektionsmitteln gut möglich, beispielsweise mit fluoreszenten Partikeln. Ein Beispiel hierfür kann der US 2005/0037231 A1 entnommen werden. Dort wird auch beschrieben, wie eine Dickenmessung erfolgen kann. Die Dickenmessung der Schichten des Kunststoff-Folienverbundes ist außerdem in der bereits erwähnten US 7,858,953 B2 beschrieben oder in der EP 1 180 660 A2.

Es wurde bereits erläutert, dass die Coextrusionsvorrichtung bevorzugt einen Coextrusionsadapter aufweist, der zum Erzielen einer variablen Schichtdickengebung ein Stellmittel aufweist. Wenn ein Stellmittel vorhanden ist, dann kann ein Controller an der Anlage mit einer Ansteuerung des Stellmittels eine Schicht gezielt dicker oder dünner als im bisherigen Produktionsverfahren gießen.

Es wird daher als eine besonders vorteilhafte Ausführungsform erachtet, wenn ein Controller vorgesehen ist, welcher mit der Detektiereinrichtung datenverbunden ist und welcher zu einem Schichtdickenbeeinflussmittel wirkverbunden ist, wobei der Controller dazu eingerichtet, hinsichtlich eines Sollwerts für eine Schichtdicke eine Regelung mittels des Schichtdickenbeeinflussmittels durchzuführen.

Das Schichtdickenbeeinflussmittel kann beispielsweise das Stellglied zum Erzielen einer variablen Schichtdickengebung im Coextrusionsadapter sein. Es kann aber auch beispielsweise ein Heizmittel sein, eine Pumpe, der Extruderantrieb, die Steuerung eines Zugabemittels zum Ausgangsmaterial oder zur Schmelze und/oder andere Mittel.

Besonders interessant ist hieran, dass eine Regelung der Schichtdicken erfolgen kann, und zwar mit nur sehr kurzer Regelverzögerung, weil - wie schon zum ersten Aspekt der Erfindung eingangs beschrieben - die Durchflussstrecke von der Zugabestelle Detektionsmittels bis zur Detektiereinrichtung jenseits des Extrusionswerkzeugs sehr kurz ist.

Die Coextrusionsvorrichtung kann beispielsweise ein Breitschlitzwerkzeug oder einen Blaskopf aufweisen.

Die Detektionsmittelzugebeinrichtung kann beispielsweise ein Pulversilo aufweisen, so dass das Detektionsmittel in Pulverform vorgehalten werden kann. Eine Alternative sieht vor, dass die Detektionsmittelzugebeinrichtung eine Fluidpumpe und bevorzugt einen Tank aufweist, so dass eine bereits in flüssiger Form vorliegende Form von Detektiermittel eingedüst werden kann.

Jenseits der Detektionsmittelzugebeinrichtung, bevorzugt jenseits jeder Detektionsmittelzugebeinrichtung, kann ein Mischer im Zulauf vorgesehen sein, bevorzugt ein Statikmischer. Um eine möglichst sichere Messung der gesamten Schichtdicke zu erzielen, muss versucht werden, das Detektiermittel möglichst homogen in der Zuführung zu der jeweiligen Schicht zu verteilen. Dazu ist ein Mischer im jeweiligen Kanal sinnvoll. Weil die Zuführung jenseits des Extruders erfolgt, kann die Homogenisierung nicht mehr vom im Extruder vorgesehen Mischer vorgenommen werden. Ein weiterer Mischer ist deshalb erforderlich, wobei ein Statikmischer besonders kostengünstig und wartungsfrei ist. In einem einfachen Fall kann beispielsweise ein Paket von Rohren oder Drähten im Kanal vorgesehen sein.

Der Sollwert kann bevorzugt manuell an einer Bedienerschnittstelle zum Controller eingegeben werden, oder er kann beispielsweise über ein Datennetzwerk ferneingespeist werden.

Es versteht sich anhand der vorstehenden Schilderungen, dass auch bei einem Einschicht-Folienerzeugungsverfahren die kurze Zeit zwischen dem Einspeisen des Detektionsmittels und dem Messen jenseits der gegossenen Folie vorteilhaft auswirken kann.

Hinsichtlich der "Schichtdicke" sei sowohl für Einschicht- als auch für Mehrschichtherstellungsanlagen darauf hingewiesen, dass die Schichtdicke nicht über die gesamte Breite der hergestellten Folie identisch sein wird. Vielmehr werden über die Breite verschiedene Schichtdicken auftauchen, so kann beispielsweise eine Dickstelle vorliegen, welche beispielsweise werkzeugbedingt ist oder welche beispielsweise einer nicht ganz homogenen Temperaturverteilung im Werkzeug geschuldet sein kann.

Als die "Schichtdicke" im Rahmen der hier vorliegenden Patentanmeldung kann beispielsweise der Mittelwert über die Breite betrachtet werden, oder es kann eine feinrasterige Messung der Schichtdicke über die Breite vorgenommen werden.

Um auch eine konventionelle Extrusionsvorrichtung mit dem hier vorgestellten, vorteilhaften Verfahren ausstatten zu können, kann ein Nachrüstkitt für eine Coextrusions- und Einschichtextrusionsvorrichtung angeboten werden, wobei das Nachrüstkitt eine Detektionsmittelzugebeinrichtung und eine Detektiereinrichtung aufweist.

Nach einem fünften Aspekt der vorliegenden Erfindung löst die gestellte Aufgabe ein Verfahren zum Messen einer Schichtdicke einer Kunststofffolie an einer Extrusionsvorrichtung, vor allem an einer Coextrusions- oder Einschichtextrusionsvorrichtung, mit den Schritten (i) Zugegeben eines Detektionsmittels in extrudiertes Ausgangsmaterial auf dem Weg vom Extruder zu einem Extrusionswerkzeug, und (ii) berührungsloses Messen der Schichtdicke mittels eines Detektiermittels jenseits des Extrusionswerkzeugs.

Um eine möglichst differenzierte Messung zu ermöglichen, wird vorgeschlagen, dass zwei getrennte Kanäle in der Zuführung von einem Extruder zum Extrusionswerkzeug beim Zugeben von Detektionsmittel unterschiedlich behandelt werden.

Es wurde bereits erläutert, dass eine solche unterschiedliche Behandlung bevorzugt für jeweils mehrere, bevorzugt alle, getrennte Kanäle in der Zuführung jedes Extruders zum Extrusionswerkzeug vorgesehen ist, der mehrere Schichten speist.

Das Detektionsmittel kann beispielsweise nur in einen von zwei getrennten Kanälen desselben Ausgangsmaterials eingespeist werden.

Alternativ oder kumulativ können unterschiedliche Detektionsmittel in die Zuführungen von verschiedenen Extrudern und/oder in getrennte Kanäle desselben Ausgangsmaterials gegeben werden.

Alternativ oder kumulativ kann die Zugabe variiert werden, insbesondere durch Ein- und Ausschalten der Zugabe und/oder durch das Umschalten der Zugabe von einem zu einem anderen der getrennten Kanäle der Zuführung eines Ausgangsmaterials.

Bevorzugt werden Messergebnisse von der Detektiereinrichtung zu einem Controller gegeben, woraufhin der Controller zum Erzielen einer Regelung auf ein elektronisches oder mechanisches Stellglied eines Schichtdickenbeeinflussmittels einwirkt, so dass die Schichtdicke dünner geregelt wird, wenn die Messergebenisse über einem vorgegebenen Sollwert liegen, und dicker geregelt wird, wenn die Messergebnisse unter dem Sollwert liegen.

Ein Verfahren zum Herstellen einer Kunststofffolie beinhaltet bevorzugt das vorstehend genannte Messeverfahren, wobei bevorzugt eine Regelung der Schichtdicken anhand der gewonnen Messergebnisse erfolgt.

Es wird vorgeschlagen, dass eine Mehrzahl Detektionsmittelzugebeinrichtungen und/oder eine Mehrzahl Zugeber angeschlossen werden, wenn es sich um eine Coextrusionsvorrichtung zum Herstellen eines Kunststofffolienverbundes mit mehreren Schichten aus einem Ausgangsmaterial, vor allem von einem Extruder, handelt.

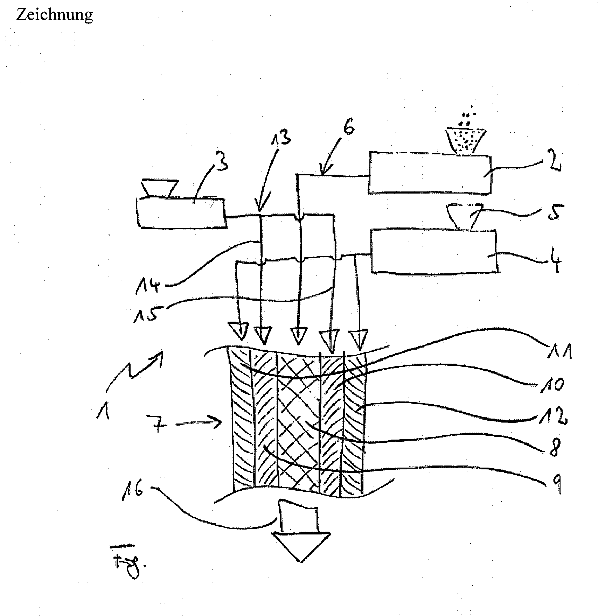

Die Erfindung wird nachstehend anhand eines Ausführungsbeispiels unter Bezugnahme auf die Zeichnung näher erläutert. In der Zeichnung zeigt die einzige Figur grob schematisch eine Anlage, somit eine Vorrichtung, zum Herstellen einer fünflagigen Kunststofffolie in einem symmetrischen Verbund, mit einer zentralen Schicht, zwei inneren Außenschichten und zwei äußeren Außenschichten, gespeist von drei Extrudern.

Die Anlage 1 in der Figur besteht im Wesentlichen aus einem ersten Extruder 2, einem zweiten Extruder 3 und einem dritten Extruder 4, jeweils mit einem Einfülltrichter 5 (exemplarisch gekennzeichnet), sowie daran anschließend einer Zuführung 6 zu einem Extrusionswerkzeug (nicht dargestellt) beispielsweise einer Breitschlitzdüse, in Form eines Coextrusionsblocks.

Die Anlage 1 stellt einen Kunststofffolienverbund 7 her. Der Kunststofffolienverbund 7 besteht aus der Zentralschicht 8, zwei inneren Außenlagen 9, 10 sowie aus zwei äußeren Außenlagen 11, 12.

Genau ein Extruder, nämlich der erste Extruder 2, speist durch den Feedblock Kunststoffschmelze (nicht dargestellt) in die Zentralschicht 8.

Der zweite Extruder 3 und der dritte Extruder 4 weisen in ihrer Zuführung 6 jeweils eine Aufteilung 13 (exemplarisch beziffert) auf, von welcher aus die von dem jeweiligen Extruder kommende Schmelze durch zwei getrennte Kanäle 14, 15 zu den beiden zugehörigen Schichten geführt wird, im Falle des zweiten Extruders 3 also zur ersten inneren Außenschicht 9 und zur zweiten inneren Außenschicht 10.

Wird nun der hergestellte Folienverbund 7 mittels der Weißlicht-Interferometrie in seinen Schichtdicken bestimmt, so kann nach dem Stand der Technik, welcher die Partikel in die Trichter 5 einspeist, nur die Zentralschicht 8 in ihrer Dicke verlässlich bestimmt werden. Die beiden inneren Außenschichten 9, 10 hingegen, genau wie die beiden äußeren Außenschichten 11, 12, können nur in ihrer Summe bestimmt werden. Weicht jeweils eine der beiden eigentlich symmetrischen Schichtenhälften nach unten vom Sollwert ab, gleichzeitig aber die andere nach oben vom Sollwert, so verändert sich die Summe der gemessenen Schichtdicke nicht zwangsweise. Es kann daher aus den ermittelten Messwerten nicht sicher darauf geschlossen werden, dass nach wie vor ein symmetrischer Folienverbund hergestellt wird.

Nach der hier vorgeschlagenen Erfindung hingegen können in die getrennten Kanäle, 14, 15 der Zuführung eines Extruders, hier also des zweiten Extruders 3, aber beispielsweise auch oder stattdessen des dritten Extruders 4, Partikel oder ein anderes Detektiermittel unterschiedlich eingebracht werden, also zeitlich unterschiedlich, mengenmäßig unterschiedlich und/oder mit unterschiedlichem Detektiermittel. Es wird dadurch möglich, die einzelnen Schichten 9, 10 oder 11, 12 individuell in ihren Schichtdicken zu messen.

### Bezugszeichenliste

- 1: Anlage
- 2: Erster Extruder
- 3: Zweiter Extruder
- 4: Dritter Extruder
- 5: Einfülltrichter
- 6: Zuführung
- 7: Kunststofffolienverbund
- 8: Zentrale Schicht
- 9: Innere Außenschicht einerseits
- 10: Innere Außenschicht andererseits
- 11: Äußere Außenschicht einerseits
- 12: Äußere Außenschicht andererseits
- 13: Aufteilung
- 14: Getrennter Kanal einerseits
- 15: Getrennter Kanal andererseits
- 16: Maschinen- und Extrusionsrichtung

## Patentansprüche

1. Coextrusionsvorrichtung zum Herstellen eines Kunststofffolienverbundes (7) mit mehreren Schichten (8, 9, 10, 11, 12) mit einer jeweiligen Schichtdicke, mit Extrudern (2, 3, 4), einem Coextrusionsblock und einer Zuführung (6) von den Extrudern (2, 3, 4) zum Coextrusionsblock, wobei ein erster Extruder (2) zum Plastifizieren eines ersten Ausgangsmaterials sowie ein zweiter Extruder (3) zum Plastifizieren eines zweiten Ausgangsmaterials vorgesehen sind, wobei eine Detektionsmittelzugebeinrichtung vorgesehen ist, welche dazu eingerichtet ist, ein Detektionsmittel zum Einbringen in eine Schicht (8, 9, 10, 11, 12) zuzugeben, und wobei eine Detektiereinrichtung im und/oder in Maschinenrichtung (16) jenseits des Coextrusionsblocks vorgesehen und dazu eingerichtet ist, anhand detektierten Detektionsmittels eine Messung einer Schichtdicke vorzunehmen,
***dadurch gekennzeichnet, dass***
die Detektionsmittelzugebeinrichtung in Maschinenrichtung (16) jenseits der Extruder (2, 3, 4) vorgesehen ist.

2. Coextrusionsvorrichtung nach Anspruch 1,
***dadurch gekennzeichnet, dass***
die Zuführung vom zweiten Extruder (3) zum Coextrusionsblock eine Aufteilung (13) aufweist, welche dazu eingerichtet ist, aus dem Extruder (3) kommende Schmelze auf zwei getrennte Kanäle (14, 15) zum Erzeugen zweier Schichten (8, 9, 10, 11, 12) aus dem zweiten Ausgangsmaterial aufzuteilen.

3. Coextrusionsvorrichtung nach Anspruch 2,
***dadurch gekennzeichnet, dass***
die Detektionsmittelzugebeinrichtung an einem der getrennten Kanäle (14, 15) angeordnet und dazu eingerichtet ist, das Detektionsmittel in die Zuführung (6) zu genau einer Schicht (8, 9, 10, 11, 12) zuzugeben.

4. Coextrusionsvorrichtung nach einem der Ansprüche 2 oder 3,
***dadurch gekennzeichnet, dass***
zwei Detektionsmittelzugebeinrichtungen an zwei der getrennten Kanäle(14, 15) angeordnet sind und jeweils dazu eingerichtet sind, Detektionsmittel in die Zuführung (6) zu genau einer Schicht (8, 9, 10, 11, 12) zuzugeben.

5. Coextrusionsvorrichtung nach einem der vorstehenden Ansprüche,
***dadurch gekennzeichnet, dass***
sie dazu eingerichtet ist, mehrere Schichten (8, 9, 10, 11, 12) im Kunststofffolienverbund (7) zu erzeugen, welche hinsichtlich ihres Werkstoffs und bevorzugt auch hinsichtlich ihrer Dicke gleich sind.

6. Coextrusionsvorrichtung nach Anspruch 5,
***dadurch gekennzeichnet, dass***
sie dazu eingerichtet ist, einen symmetrischen Kunststofffolienverbund (7) herzustellen.

7. Coextrusionsvorrichtung nach einem der vorstehenden Ansprüche,
***dadurch gekennzeichnet, dass***
die Detektiereinrichtung ein berührungsloses Messinstrument aufweist, vor allem ein Weißlicht-Interferometer.

8. Coextrusionsvorrichtung nach einem der vorstehenden Ansprüche,
***dadurch gekennzeichnet, dass***
sie einen Coextrusionsadapter aufweist, der zum Erzielen einer variablen Schichtdickengebung ein Stellmittel aufweist.

9. Coextrusionsvorrichtung nach einem der vorstehenden Ansprüche,
***dadurch gekennzeichnet, dass***
ein Controller vorgesehen ist, welcher mit der Detektiereinrichtung datenverbunden ist und welcher zu einem Schichtdickenbeeinflussmittel wirkverbunden ist, wobei der Controller dazu eingerichtet ist, hinsichtlich eines Sollwerts für eine Schichtdicke eine Regelung mittels des Schichtdickenbeeinflussmittels durchzuführen.

10. Coextrusionsvorrichtung nach einem der vorstehenden Ansprüche,
***dadurch gekennzeichnet, dass***
sie ein Breitschlitzwerkzeug aufweist.

11. Coextrusionsvorrichtung nach einem der Ansprüche 1 bis 9,
***dadurch gekennzeichnet, dass***
sie einen Blaskopf aufweist.

12. Coextrusionsvorrichtung nach einem der vorstehenden Ansprüche,
***dadurch gekennzeichnet, dass***
die Detektionsmittelzugebeinrichtung ein Pulversilo aufweist.

13. Coextrusionsvorrichtung nach einem der vorstehenden Ansprüche,
***dadurch gekennzeichnet, dass***
die Detektionsmittelzugebeinrichtung eine Fluidpumpe und bevorzugt einen Tank aufweist.

14. Coextrusionsvorrichtung nach einem der vorstehenden Ansprüche,
***dadurch gekennzeichnet, dass***
jenseits der Detektionsmittelzugebeinrichtung ein Mischer im Zulauf vorgesehen ist, bevorzugt ein Statikmischer.

15. Verfahren zum Messen einer Schichtdicke einer Kunststofffolie an einer Extrusionsvorrichtung, vor allem einer Coextrusionsextrudsionsvorrichtung gemäß einem der Ansprüche 1 bis 14 oder einer Einschichtextrusionsvorrichtung, mit den Schritten
i) Zugeben eines Detektionsmittels in extrudiertes Ausgangsmaterial auf dem Weg vom Extruder (2, 3, 4) zu einem Extrusionswerkzeug;
ii) Berührungsloses Messen der Schichtdicke mittels eines Detektiermittels jenseits des Extrusionswerkzeugs.

16. Verfahren nach Anspruch 15,
***dadurch gekennzeichnet, dass***
zwei getrennte Kanäle (14, 15) in der Zuführung (6) von einem Extruder (2, 3, 4) zum Extrusionswerkzeug beim Zugeben von Detektionsmittel unterschiedlich behandelt werden.

17. Verfahren nach Anspruch 16,
***dadurch gekennzeichnet, dass***
das Detektionsmittel nur in einen von zwei getrennten Kanälen (14, 15) desselben Ausgangsmaterials eingespeist wird.

18. Verfahren nach eip.em der Ansprüche 15 bis 17,
***dadurch gekennzeichnet, dass***
unterschiedliche Detektionsmittel in die Zuführungen (6) von verschiedenen Extrudern (2, 3, 4) und/oder in getrennte Kanäle (14, 15) desselben Ausgangsmaterials gegeben werden.

19. Verfahren nach einem der Ansprüche 15 bis 18,
***dadurch gekennzeichnet, dass***
die Zugabe variiert wird, insbesondere durch Ein- und Ausschalten der Zugabe und/oder durch Umschalten der Zugabe von einem zu einem anderen der getrennten Kanäle (14, 15) der Zuführung (6) eines Ausgangsmaterials.

20. Verfahren nach einem der Ansprüche 15 bis 19,
***dadurch gekennzeichnet, dass***
Messergebnisse von der Detektiereinrichtung zu einem Controller gegeben werden, woraufhin der Controller zum Erzielen einer Regelung auf ein elektronisches oder mechanisches Stellglied eines Schichtdickenbeeinflussmittels einwirkt, sodass die Schichtdicke dünner geregelt wird, wenn die Messergebnisse über einem vorgegebenen Sollwert liegen, und dicker geregelt, wenn die Messergebnisse unter dem Sollwert liegen.

21. Verfahren zum Herstellen einer Kunststofffolie unter Verwendung eines Verfahrens nach einem der Ansprüche 15 bis 20, wobei bevorzugt eine Regelung der Schichtdicken anhand der gewonnenen Messergebnisse erfolgt.

22. Verfahren nach einem, der Ansprüche 15 bis 21, ***dadurch gekennzeichnet, dass*** eine Mehrzahl Detektionsmittelzugebeinrichtungen und/oder eine Mehrzahl Zugeber angeschlossen werden.

## Claims

1. Coextrusion device for producing a plastic composite film (7) with multiple layers (8, 9, 10, 11, 12) having a respective layer thickness; with extruders (2, 3, 4), a coextrusion block and a feeding device (6) from the extruders (2, 3, 4) to the coextrusion block; a first extruder (2) being provided for plastification of a first starting material and a second extruder (3) for plastification of a second starting material; a detection means adding device being provided which is adapted to add a detection means for introduction into a layer (8, 9, 10, 11, 12); a detection unit being provided in the machine direction (16) outside the coextrusion block and being adapted to perform a measurement of a layer thickness by means of the detected detection means;
***characterized in that***
the detection means adding device is provided in the machine direction (16) outside of the extruders (2, 3, 4).

2. Coextrusion device according to Claim 1,
***characterized in that***
the feeding device from the second extruder (3) to the coextrusion block has a bifurcation (13) adapted to divide the molten mass coming from the extruder (3) over two channels (14, 15) for producing two layers (8, 9, 10, 11, 12) of the second starting material.

3. Coextrusion device according to Claim 2,
***characterized in that***
the detection means adding device is arranged at one of the separated channels (14, 15) and is adapted to add the detection means in the feeding device (6) to exactly one layer (8, 9, 10, 11, 12).

4. Coextrusion device according to one of Claims 2 or 3,
***characterized in that***
two detection means adding devices are arranged at two of the separated channels (14, 15) and are each adapted to add detection means in the feeding device (6) to exactly one layer (8, 9, 10, 11, 12).

5. Coextrusion device according to one of the above Claims,
***characterized by***
being adapted to produce multiple layers (8, 9, 10, 11, 12) in the plastic composite film (7) which are equal in terms of material and preferably also in terms of thickness.

6. Coextrusion device according to Claim 5,
***characterized by***
being adapted for producing a symmetric plastic composite film (7).

7. Coextrusion device according to one of the above Claims,
***characterized in that***
the detection unit has a non-contact measuring instrument, in particular a white-light interferometer.

8. Coextrusion device according to one of the above Claims,
***characterized in that***
it has a coextrusion adapter which has a set-up agent for producing variable layer thicknesses.

9. Coextrusion device according to one of the above Claims,
***characterized in that***
a controller is provided which has a data connection to the detection unit and which is operatively connected to a layer thickness influencing means; the controller being adapted to perform a closed-loop control via the layer thickness influencing means, with respect to a desired value for a layer thickness.

10. Coextrusion device according to one of the above Claims,
***characterized in that***
it has a sheet die.

11. Coextrusion device according to one of Claims 1 through 9,
***characterized in that***
it has a blowing head.

12. Coextrusion device according to one of the above Claims,
***characterized in that***
the detection means adding unit has a powder silo.

13. Coextrusion device according to one of the above Claims,
***characterized in that***
the detection means adding unit has a fluid pump and preferably a tank.

14. Coextrusion device according to one of the above Claims,
***characterized in that***
outside the detection means adding unit, a mixer is provided in the inlet, preferably a static mixer.

15. Method of measuring a layer thickness of a plastic film at an extrusion device, in particular a coextrusion device according to one of Claims 1 through 14 or a single-layer extrusion device, including the steps of
i) adding a detection means to extruded starting material on the path from the extruder (2, 3, 4) to an extrusion die;
ii) non-contact measuring of the layer thickness via a detection means outside the extrusion die.

16. Method according to Claim 15,
***characterized in that***
two separate channels (14, 15) in the feeding device (6) from an extruder (2, 3, 4) to the extrusion die are treated differently in addition of the detection means.

17. Method according to Claim 16,
***characterized in that***
the detection means is only fed into one of two separate channels (14, 15) of the same starting material.

18. Method according to one of Claims 15 through 17,
***characterized in that***
different detection means are fed into the feeding devices (6) of different extruders (2, 3, 4) and/or into separate channels (14, 15) of the same starting material.

19. Method according to one of Claims 15 through 18,
***characterized in that***
the addition is varied, in particular by switching the addition on and off and/or by switching the addition from one to another of the separate channels (14, 15) of the feeding device (6) of a starting material.

20. Method according to one of Claims 15 through 19,
***characterized in that***
measurement results are fed from the detection unit to a controller, upon which the controller acts on an electronical or mechanical actuator of a layer thickness influencing means in order to achieve a closed-loop control, so that the layer thickness is controlled to be thinner when the measurement results lie above a predefined desired value, and is controlled to be thicker when the measurement results lie below the desired value.

21. Method of producing a plastic film using a method according to one of Claims 15 through 20, preferably a closed-loop control of the layer thicknesses occurring by means of the obtained measurement results.

22. Method according to one of Claims 15 through 21, ***characterized in that*** a plurality of detection means adding units and/or a plurality of adding devices are connected.

## Revendications

1. Dispositif de coextrusion, destiné à fabriquer un composite de film en matière plastique (7) comprenant plusieurs couches (8, 9, 10, 11, 12) d'une épaisseur de couche respective, pourvu d'extrudeuses (2, 3, 4), d'un bloc de coextrusion et d'une alimentation (6) à partir des extrudeuses (2, 3, 4) vers le bloc de coextrusion, une première extrudeuse (2) étant prévue pour plastifier une première matière de départ et une deuxième extrudeuse (3) étant prévue pour plastifier une deuxième matière de départ, un système d'adjonction d'agents détecteurs étant prévu, lequel est aménagé pour ajouter un agent détecteur destiné à être introduit dans une couche (8, 9, 10, 11, 12), et un système de détection étant prévu au-delà du bloc de coextrusion, dans la direction de la machine (16) et étant aménagé pour procéder, à l'aide d'agents détecteurs détectés à une mesure d'une épaisseur de couche respective,
**caractérisé en ce que**
le système d'adjonction d'agents détecteurs est prévu au-delà de l'extrudeuse (2, 3, 4), dans la direction de la machine (16).

2. Dispositif de coextrusion selon la revendication 1,
**caractérisé en ce que**
l'alimentation de la deuxième extrudeuse (3) vers le bloc de coextrusion comporte une répartition (13), laquelle est aménagée pour répartir de la masse fondue provenant de l'extrudeuse (3) sur deux canaux (14, 15) séparés, pour créer deux couches (8, 9, 10, 11, 12) de la deuxième matière de départ.

3. Dispositif de coextrusion selon la revendication 2,
**caractérisé en ce que**
le système d'adjonction d'agents détecteurs est placé sur l'un des canaux (14, 15) séparés et est aménagé pour ajouter l'agent détecteur dans l'alimentation (6) à précisément une couche (8, 9, 10, 11, 12).

4. Dispositif de coextrusion selon l'une quelconque des revendications 2 ou 3,
**caractérisé en ce que**
deux systèmes d'adjonction d'agents détecteurs sont placés sur deux des canaux (14, 15) séparés et sont aménagés chacun pour ajouter de l'agent détecteur dans l'alimentation (6) à précisément une couche (8, 9, 10, 11, 12).

5. Dispositif de coextrusion selon l'une quelconque des revendications précédentes,
**caractérisé en ce qu'**il est aménagé pour créer dans le composite de film en matière plastique (7) plusieurs couches (8, 9, 10, 11, 12), qui sont identiques au niveau de leur matériau et de préférence également au niveau de leur épaisseur.

6. Dispositif de coextrusion selon la revendication 5,
**caractérisé en ce qu'**il est aménagé pour fabriquer un composite de film en matière plastique (7) symétrique.

7. Dispositif de coextrusion selon l'une quelconque des revendications précédentes,
**caractérisé en ce que**
le système de détection comporte un instrument de mesure sans contact, prioritairement un interféromètre à lumière blanche.

8. Dispositif de coextrusion selon l'une quelconque des revendications précédentes,
**caractérisé en ce qu'**il comporte un adaptateur de coextrusion, qui comporte un moyen de réglage, permettant d'obtenir la génération d'une épaisseur de couche variable.

9. Dispositif de coextrusion selon l'une quelconque des revendications précédentes,
**caractérisé en ce qu'**il est prévu un contrôleur, lequel est connecté par données avec le système de détection et lequel est en interaction avec un moyen d'influence de l'épaisseur de couche, le contrôleur étant aménagé pour procéder en rapport à une valeur de consigne pour une épaisseur de couche respective à un réglage à l'aide du moyen d'influence de l'épaisseur de couche.

10. Dispositif de coextrusion selon l'une quelconque des revendications précédentes,
**caractérisé en ce qu'**il comporte un outil à fente large.

11. Dispositif de coextrusion selon l'une quelconque des revendications 1 à 9,
**caractérisé en ce qu'**il comporte une tête de soufflage.

12. Dispositif de coextrusion selon l'une quelconque des revendications précédentes,
**caractérisé en ce que**
le système d'adjonction d'agents détecteurs comporte un silo à poudre.

13. Dispositif de coextrusion selon l'une quelconque des revendications précédentes,
**caractérisé en ce que**
le système d'adjonction d'agents détecteurs comporte une pompe à fluide et de préférence, un réservoir.

14. Dispositif de coextrusion selon l'une quelconque des revendications précédentes,
**caractérisé en ce qu'**au-delà du système d'adjonction d'agents détecteurs un malaxeur, de préférence un malaxeur statique est prévu dans l'arrivée.

15. Procédé, destiné à mesurer une épaisseur de couche respective d'un film en matière plastique sur un dispositif d'extrusion, prioritairement sur un dispositif de coextrusion selon l'une quelconque des revendications 1 à 14 ou sur un dispositif d'extrusion monocouche, comportant les étapes consistant à
i) ajouter un agent détecteur dans une matière de départ extrudée sur la voie de l'extrudeuse (2, 3, 4) vers un outil d'extrusion ;
ii) mesurer sans contact l'épaisseur de couche respective à l'aide d'un agent de détection au-delà de l'outil d'extrusion.

16. Procédé selon la revendication 15,
**caractérisé en ce que**
lors de l'adjonction de l'agent de détection, deux canaux (14, 15) séparés dans l'alimentation (6) d'une extrudeuse (2, 3, 4) vers l'outil d'extrusion sont traités différemment.

17. Procédé selon la revendication 16,
**caractérisé en ce que**
l'on n'introduit l'agent détecteur que dans l'un de deux canaux (14, 15) séparés de la même matière de départ.

18. Procédé selon l'une quelconque des revendications 15 à 17,
**caractérisé en ce que**
l'on introduit différents agents détecteurs dans les alimentations (6) de différentes extrudeuses (2, 3, 4) et/ou dans des canaux (14, 15) séparés de la même matière de départ.

19. Procédé selon l'une quelconque des revendications 15 à 18,
**caractérisé en ce que**
l'on fait varier l'adjonction, notamment par mise en marche et à l'arrêt de l'adjonction et/ou par commutation de l'adjonction de l'un vers un autre des canaux (14, 15) séparés de l'alimentation (6) d'une matière de départ.

20. Procédé selon l'une quelconque des revendications 15 à 19,
**caractérisé en ce que**
l'on alimente des résultats de mesure du système de détection vers un contrôleur, suite à quoi, pour obtenir un réglage, le contrôleur agit sur un actionneur électronique ou mécanique d'un moyen d'influence de l'épaisseur de couche, de telle sorte que l'épaisseur de couche respective soit réglée pour être plus mince lorsque les résultats de mesure sont supérieurs à une valeur de consigne prédéfinie et soit réglée pour être plus épaisse, lorsque les résultats de mesure sont inférieurs à la valeur de consigne.

21. Procédé destiné à fabriquer un film en matière plastique en utilisant un procédé selon l'une quelconque des revendications 15 à 20, lors duquel il s'effectue de préférence un réglage des épaisseurs de couche à l'aide des résultats de mesure obtenus.

22. Procédé selon l'une quelconque des revendications 15 à 21, **caractérisé en ce qu'**on raccorde une multiplicité de systèmes d'adjonction d'agents détecteurs et/ou une multiplicité d'ajouteurs.
